# EUROPÄISCHE PATENTANMELDUNG

(11) **EP 2 876 225 A1**
(43) Veröffentlichungstag der Anmeldung: **27.05.2015**
(21) Anmeldenummer: 14190601.6
(22) Anmeldetag: 28.10.2014
(51) Int. Cl.: E04B 9/00, E04B 9/24

(54) **Befestigungssystem für ein Deckenelement und damit ausgerüstetes Deckenelement**

(30) Priorität: 20.11.2013 DE 202013105247 U
(71) Anmelder: DIRECTTECH Global GmbH, 47441 Moers (DE)
(72) Erfinder: Pastore, Michele, 47198 Duisburg (DE); Navarro Romero, Vicente, 47441 Moers (DE); Giesen, Thomas, 47443 Moers (DE)
(74) Vertreter: Schoenen, Norbert

(57) **Zusammenfassung**

Das Befestigungssystem für ein Deckenelement (1), insbesondere ein Heizelement, zum Einbau in einen Ausschnitt einer Raumdecke (2), wobei der Ausschnitt größer als die Außenmaße des Deckenelementes (1) ist, so dass eine Lücke zwischen dem Ausschnitt und dem Deckenelement im eingebauten Zustand entsteht, ist dadurch gekennzeichnet, dass das Befestigungssystem Kragelemente (5, 6) zum Anbringen an der Oberseite des Deckenelementes (1) mit einem Überstand nach außen umfasst, dass der Überstand geringer als die Lücke ist, dass das Befestigungselement mindestens ein Magnetpaar (8, 9) umfasst, von dem der eine Magnet (8) an der Innenseite des Ausschnitts und der andere Magnet (9) an der Außenseite des Deckenelementes anbringbar ist.

## Beschreibung

Die Erfindung betrifft ein Befestigungssystem für ein Deckenelement (1), insbesondere ein Heizelement, zum Einbau in einen Ausschnitt (3) einer Raumdecke (2), wobei der Ausschnitt (3) größer als die Außenmaße des Deckenelementes (1) ist, so dass eine Lücke (25) zwischen dem Ausschnitt und dem Deckenelement im eingebauten Zustand entsteht. Als Lücke wird hier die Differenz zwischen der Ausschnittbreite/länge und der zugeordneten Breite/Länge des Deckenelements bezeichnet.

### Stand der Technik

Zum Montieren eines Deckenelementes in eine Raumdecke, zum Beispiel und insbesondere in eine Gipskartondecke sind unterschiedliche Montagemethoden und Befestigungssysteme bekannt. Diese bekannten Systeme sind oft nicht auf einfache Weise zu montieren und die Montage dauert auch relativ lange.

### Aufgabe und Lösung der Erfindung

Aufgabe der Erfindung: Das Deckenelement soll sehr einfach und schnell zu montieren und zu demontieren sein. Eine sichere Befestigung soll gewährleistet sein. Das Deckenelement soll gleichzeitig problemlos in der Höhe auszurichten sein. Außerdem soll das Deckenelement gegen ein Hochdrücken von unten gesichert sein.

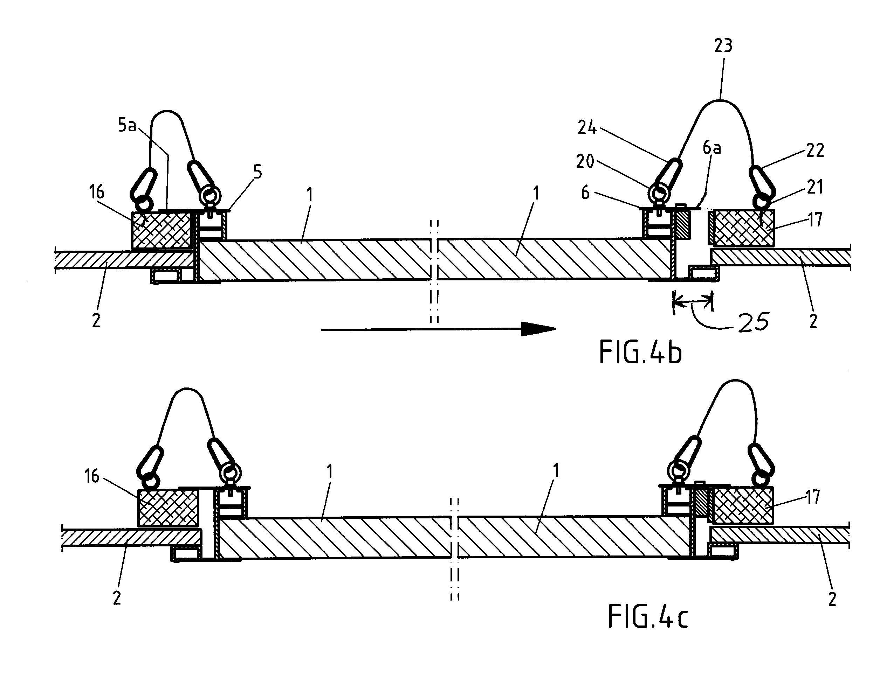

Diese Aufgabe wird bei einem Befestigungssystem für ein Deckenelement und damit ausgerüstetes Deckenelement der eingangs genannten Art erfindungsgemäß dadurch gelöst, dass das Befestigungssystem Kragelemente (4, 5, 6, 7) zum Anbringen an der Oberseite des Deckenelementes (1) mit einem Überstand (5a, 6a) nach außen umfasst, dass das Befestigungselement mindestens ein Magnetpaar (8, 9, 10, 11) umfasst, von dem der eine Magnet (8, 10) an der Innenseite des Ausschnitts und der andere Magnet (9, 11) an der Außenseite des Deckenelementes anbringbar ist, dass der Überstand (6a) des Kragelementes (6, 7) an der das Magnetpaar (8, 9, 10, 11) tragenden Kante des Deckenelementes (1) kürzer als die Lücke (25) ist (Figur 4b) und dass der Überstand (5a) an der gegenüberliegenden Kante des Deckenelementes (1) länger als die Lücke (25) ist.

Vorteilhafte Ausgestaltungen der Erfindung sind in den Unteransprüchen angeführt.

Die Deckenelemente sind mit dem neuartigen Befestigungssystem sehr einfach und schnell zu montieren. Insbesondere sind dabei das vorgeschlagene Magnetsystem und die oberen Laschen (4, 5, 6, 7), also die Vorsprünge bzw. Kragelemente vorgesehen.

Eine besonders sichere Befestigung des Deckenelementes an der Raumdecke ergibt sich durch die an beiden Seiten vorgesehenen Kragelemente (Laschen). Das Gewicht des Deckenelementes wird durch diese Laschen oder Kragelemente (4, 5, 6, 7) getragen. Zur Klarstellung sei ausgeführt, dass die Magnete (8, 9, 10, 11) nicht das Gewicht des Deckenelementes (1) tragen.

Eine leichte und problemlose Ausrichtung des Deckenelementes in der Höhe, also in Bezug auf die Unterseite der Raumdecke wird durch die Profile (12, 13) an der Oberseite des Deckenelementes erreicht. Die Profilelemente (12, 13) erstrecken sich vorzugsweise über die gesamte Länge der langen Kante des Deckenelementes (1).

Die an der Unterseite des Deckenelementes vorgesehenen Profile bzw. Kragelemente (14, 15) oder Laschen sichern das Deckenelement gegen ein Hochdrücken von unten und damit gegen ein nur mit relativ geringer Kraft mögliches tangentiales Verschieben der Magnete gegeneinander. Dies ist aufgrund dieser unteren Profile und Kragelemente (14, 15) mit dem jeweiligen Überstand (14a, 15a) nicht möglich. Das Deckenelement ist damit im eingebauten Zustand nur horizontal gegen die maximale Magnetkraft bewegbar. Eine sichere Halterung im eingebauten Zustand ist damit gewährleistet.

Eines der Magnete jedes Magnetpaares ist stationär an der Raumdecke und das andere an der Außenseite des Deckenelementes angebracht.

### Ausführungsbeispiel

Im Folgenden wird ein Ausführungsbeispiel der Erfindung anhand von Zeichnungen näher beschrieben. In allen Zeichnungen haben gleiche Bezugszeichen die gleiche Bedeutung und werden daher gegebenenfalls nur einmal erläutert.

Es zeigen
- Figur 1: eine Draufsicht von oben auf ein in eine Raumdecke eingebautes Heizelement,

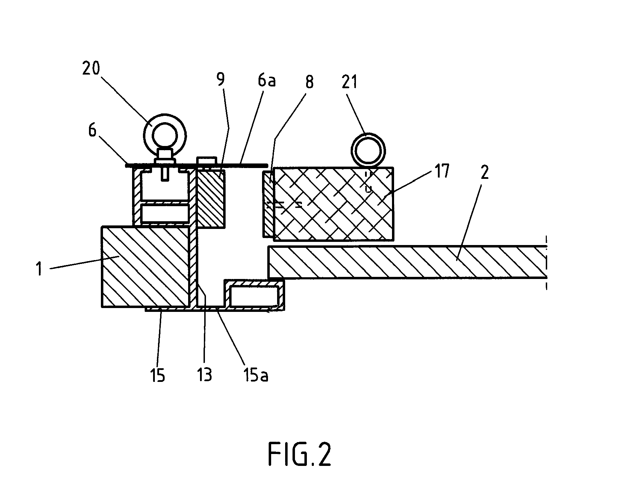

- Figur 2: den Schnitt A-A in Figur 1, wobei aber das Heizelement nach links verschoben ist, so dass die Magnete 8 und 9 einen Abstand voneinander haben,
- Figur 3: eine schematische geschnittene Seitenansicht der gesamten Anordnung in der Position vor der Montage bzw. nach der Demontage,
- Figur 4a: den ersten Schritt bei der Montage des Deckenelementes,
- Figur 4b: den zweiten Schritt bei der Montage,
- Figur 4c: das fertig montierte Deckenelement entsprechend der Figur 1,
- Figur 5a: den ersten Schritt bei der Demontage des Deckenelementes und
- Figur 5b: den zweiten Schritt bei der Demontage, wobei der letzte Schritt bereits in Figur 3 dargestellt ist.

Bei der Montage wird wie folgt vorgegangen: Zunächst wird die Raumdecke ausgeschnitten, um einen Ausschnitt 3 gemäß der Vorgabe für das jeweilige Deckenelement 1 zu erhalten.

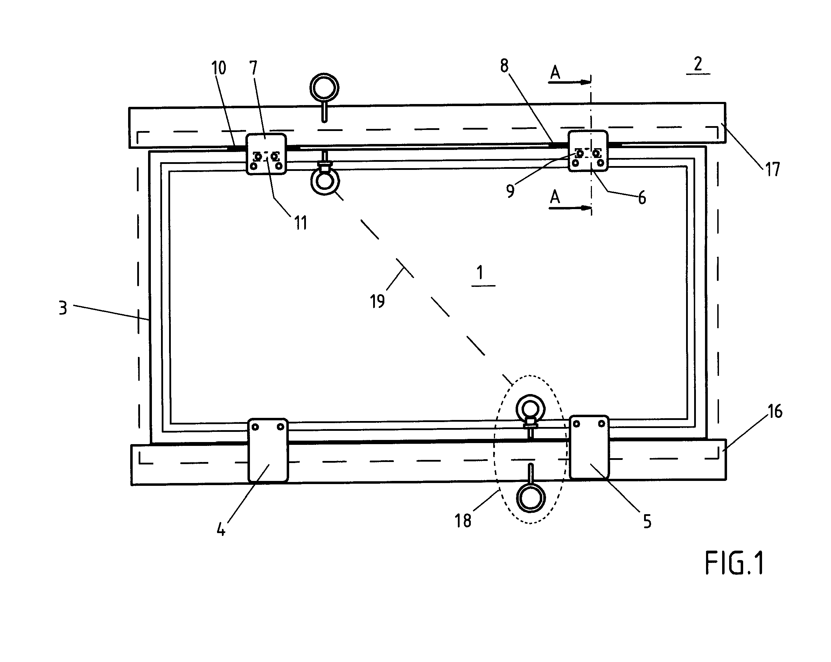

Im Randbereich des Ausschnittes 3, oberhalb der Gipskartondecke 2, ist eine Holzlattung 16, 17 auf der ganzen Länge der langen Seite des Ausschnitts 3 zu fixieren, wie es in Figur 1 dargestellt ist. Vor der Montage der Holzlattungen 16 und 17 sind die Magnetplatten 8, 10 sowie die Holz-Ösen-Schrauben 21 zu montieren. Die Magnetplatten 8, 10 müssen korrespondierend zur Position der bereits am Rahmen des Elementes 1 montierten Magnete 9, 11 an der Holzlattung 16, 17 montiert werden (siehe Figur 1). Die Holz-Ösen-Schrauben 21, welche zur Aufnahme der Montagehilfe (Seile 23 mit Karabinerhaken 22, 24) dienen, werden in diagonaler Ausrichtung zueinander (siehe Bezugszahl 19 in Figur 1) in der Holzlattung 16, 17 verschraubt. Die Ring-Ösen-Schrauben 20 werden in die dafür vorgesehenen Vierkantmuttern, welche sich im rückseitigen Rahmenprofil 12, 13 befinden, in der Position entsprechend Figur 1 neben der Halterung eingeschraubt. Mit den Seilen 23 und den Karabinerhaken 22, 24 werden die Ring-Ösen-Schrauben 20 am Element 1 mit den Holz-Ösen-Schrauben 21 an der Holzlattung 16, 17 verbunden. Dadurch werden eine Montagesicherung und eine Montagehilfe erreicht.

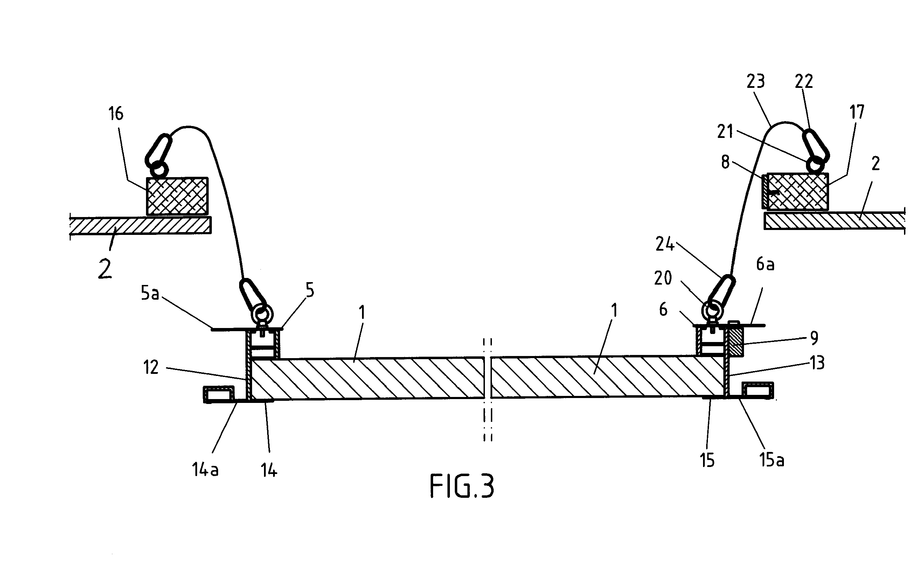

Das Deckenelement 1 befindet sich nun, gesichert durch die Seile 23, in der Ruheposition entsprechend Figur 3.

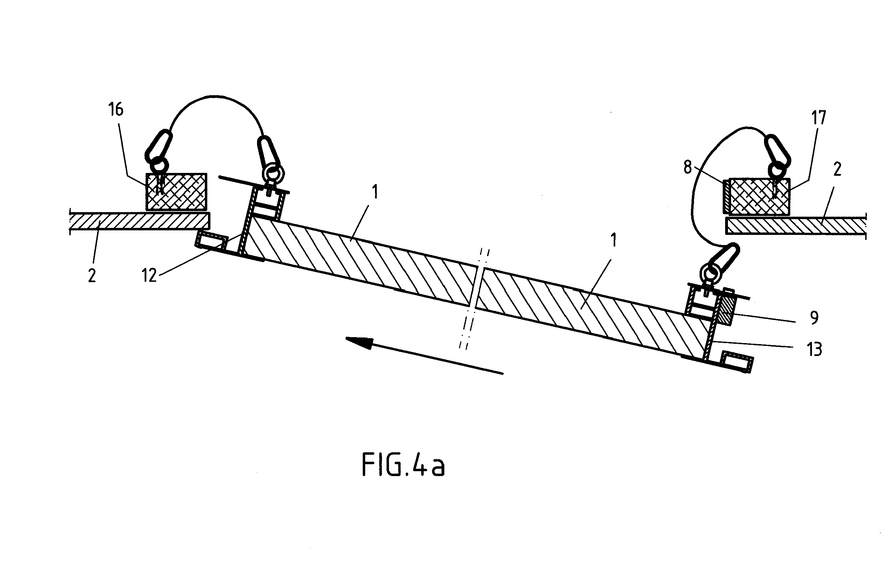

Falls es sich um ein elektrisches Deckenelement, z. B. ein Heizelement handelt, werden nun die elektrischen Anschlüsse hergestellt. Dann wird das Element 1 entsprechend Figur 4a in den Ausschnitt eingelegt und durch Schieben des Elements 1 in Richtung auf die Magnetplatten 8, 10 zum direkten Verbinden (Anhaften) der Magnete mit den Magnetplatten gebracht (Figur 4b und Figur 4c), wobei ein Klickgeräusch entsteht.

Damit ist die Montage bereits abgeschlossen.

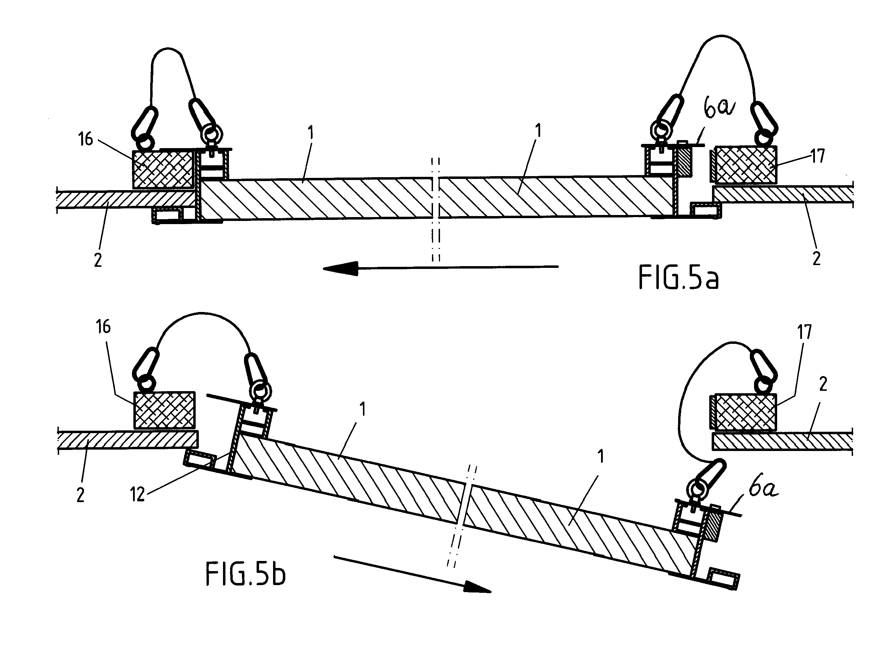

Bei der Demontage wird in umgekehrter Reihenfolge, ausgehend von der Position in Figur 4c, und entsprechend den Figuren 5a und 5b vorgegangen. Das Element 1 wird aus dem Ausschnitt 3 herausgehoben (Figur 5b) und in die Ruheposition entsprechend Figur 3 gebracht. Danach müssen nur noch die elektrischen Anschlüsse abgeschaltet werden.

### Bezugszeichenliste (in Klammern stehen ggfs. die konkreten Bezeichnungen aus der Beschreibung des Ausführungsbeispiels)

- 1: Deckenelement
- 2: Raumdecke (Gipskartondecke)
- 3: Ausschnitt
- 4: Kragelement (Lasche)
- 5: Kragelement (Lasche)
- 5a: Überstand
- 6: Kragelement (Lasche)
- 6a: Überstand
- 7: Kragelement (Lasche)
- 8: Magnet (Magnetplatte)
- 9: Magnet
- 10: Magnet (Magnetplatte)
- 11: Magnet
- 12: Profilelement
- 13: Profilelement
- 14: Kragelement
- 14a: Überstand
- 15: Kragelement
- 15a: Überstand
- 16: Holzlattung
- 17: Holzlattung
- 18: Verbindung der Ösen mittels Seil und Karabinerhaken
- 19: Diagonal zueinander sind die Ösen angebracht
- 20: Ring-Ösen-Schraube
- 21: Holz-Ösen-Schraube
- 22: Karabinerhaken
- 23: Seil
- 24: Karabinerhaken
- 25: Lücke (Figur 4b)

## Patentansprüche

1. Befestigungssystem für ein Deckenelement (1), insbesondere ein Heizelement, zum Einbau in einen Ausschnitt (3) einer Raumdecke (2), wobei der Ausschnitt (3) größer als die Außenmaße des Deckenelementes (1) ist, so dass eine Lücke zwischen dem Ausschnitt und dem Deckenelement im eingebauten Zustand entsteht,
**dadurch gekennzeichnet,**
**dass** das Befestigungssystem Kragelemente (4, 5, 6, 7) zum Anbringen an der Oberseite des Deckenelementes (1) mit einem Überstand (5a, 6a) nach außen umfasst, dass das Befestigungselement mindestens ein Magnetpaar (8, 9, 10, 11) umfasst, von dem der eine Magnet (8, 10) an der Innenseite des Ausschnitts und der andere Magnet (9, 11) an der Außenseite des Deckenelementes anbringbar ist, dass der Überstand (6a) des Kragelementes (6, 7) an der das Magnetpaar (8, 9, 10, 11) tragenden Kante des Deckenelementes (1) kürzer als die Lücke (25) ist und dass der Überstand (5a) an der gegenüberliegenden Kante des Deckenelementes (1) länger als die Lücke (25) ist.

2. Befestigungssystem nach Anspruch 1,
**dadurch gekennzeichnet,**
**dass** an zwei gegenüberliegenden Seiten Kragelemente (4, 5, 6, 7) vorgesehen sind.

3. Befestigungssystem nach Anspruch 1,
**dadurch gekennzeichnet,**
**dass** die Kragelemente (4, 5, 6, 7) über Profilelemente (12, 13) an dem Deckenelement (1) befestigbar sind.

4. Befestigungssystem nach Anspruch 1,
**dadurch gekennzeichnet,**
**dass** das Befestigungssystem weitere Kragelemente (14, 15) zum Anbringen an der Unterseite des Deckenelementes (1) mit einem Überstand (14a, 15a) nach außen umfasst.

5. Befestigungssystem nach Anspruch 1,
**dadurch gekennzeichnet,**
**dass** die Magnete des Magnetpaares (8, 9, 10, 11) derart befestigbar sind, dass ihre gegenseitige Anziehungskraft in Richtung der Ebene der Raumdecke (2), insbesondere horizontal bei einer horizontalen Raumdecke (2), wirkt.

6. Befestigungssystem nach Anspruch 1,
**dadurch gekennzeichnet,**
**dass** die Kragelemente (4, 5, 6, 7, 14, 15) als Laschen ausgebildet sind.

7. Deckenelement, insbesondere Heizelement, mit einem Befestigungssystem nach einem der vorhergehenden Ansprüche.
